# EUROPÄISCHE PATENTANMELDUNG

(11) **EP 1 362 722 A1**
(43) Veröffentlichungstag der Anmeldung: **19.11.2003**
(21) Anmeldenummer: 02100491.6
(22) Anmeldetag: 14.05.2002
(51) Int. Cl.: B60H 1/00, F25B 45/00, F16L 37/28

(54) **Anschlussystem für eine Kraftfahrzeug-Klimaanlage**

(71) Anmelder: Ford Global Technologies, Inc., A subsidiary of Ford Motor Company, Dearborn, Michigan 48126 (US)
(72) Erfinder: Fischer, Dietmar, 50733, Koeln (DE); Heinz, Uwe, 41812, Erkelenz (DE)
(74) Vertreter: Drömer, Hans-Carsten, Dr.-Ing.

(57) **Zusammenfassung**

Die Erfindung bezieht sich auf eine Klimaanlage für Kraftfahrzeuge, die einen Anschlußstutzen für einen Druckschalter/-sensor enthält, der nach Entfernen des Druckschalters/-sensors zur Evakuierung und Befüllung der Klimaanlage geeignet ist, so daß die beiden üblicherweise getrennten Funktionen in einem Stutzen zusammenfaßt sind.

## Beschreibung

Die Erfindung bezieht sich auf eine Klimaanlage für Kraftfahrzeuge, die einen Anschlußstutzen für einen Druckschalter/-sensor enthält, der nach Entfernen des Druckschalters/-sensors zur Evakuierung und Befüllung der Klimaanlage geeignet ist, so daß die beiden üblicherweise getrennten Funktionen in einem Stutzen zusammenfaßt sind. Die Erfindung bezieht sich ferner auf einen Adapter, der es ermöglicht, eine Evakuier- und Befülleinheit an einem heute gebräuchlichen Anschlußstutzen für einen Druckschalter/-sensor anzuschließen. Dadurch wird die heute gebräuchliche zusätzliche Anordnung von Anschlußstutzen für die Evakuierung und Befüllung der Klimaanlage überflüssig.

Kraftfahrzeuge werden üblicherweise mit Brennkraftmaschinen angetrieben. Diese Brennkraftmaschinen werden wiederum mittels eines Kühlkreislaufes auf einem bestimmten Temperaturniveau gehalten. Zur Beheizung des Innenraumes eines Kraftfahrzeuges wird in der Regel das umlaufende Kühlmittel diese Kühlkreislaufes verwendet, welches über einen Wärmetauscher und ein Gebläse die enthaltene Wärme an den Innenraum abgibt.

Zur Kühlung des Innenraumes eines Kraftfahrzeuges werden zunehmend Klimaanlagen verwendet. Stand der Technik ist es, wie beschrieben in Vieweg Handbuch Kraftfahrzeugtechnik 2. Auflage, April 2001, S. 5 ff., dabei einen Kältemittelkompressor mechanisch von der Brennkraftmaschine eines Kraftfahrzeuges antreiben zu lassen. Das Kältemittel wird vom Kompressor durch einen Kondensator, der die Wärme aus dem Kältemittel abführt, und einen Sammler zum Expansionsventil gefördert. Hier entspannt sich das im Kompressor verdichtete Kältemittel und verdampft anschließend im Verdampfer und entzieht so in bekannter Weise der Umgebungsluft Wärme. In der Regel wird der Verdampfer in das Heizungsgehäuse integriert, so daß das Gebläse und die Luftverteilung der Kraftfahrzeugheizung mitbenutzt werden können. Vom Verdampfer wird das Kältemittel zurück zum Kompressor geführt und somit der Kältemittelkreislauf geschlossen.

Alternativ zum Expansionsventil wird als Drosselorgan häufig ein Kapillarröhrchen eingesetzt. Dieses ist wesentlich preiswerter als ein Expansionsventil, allerdings muß dann der erwähnte Sammler durch einen ungefähr doppelt so großen Akkumulator in der Leitung vom Verdampfer zurück zum Kompressor ersetzt werden.

Die Regelung von Klimaanlagen mit Kapillarröhrchen wird üblicherweise über ein geeignetes druckempfindliches Bauteil wie einen Druckschalter oder Drucksensor vorgenommen, welches ebenfalls in der Leitung zwischen Verdampfer und Kompressor angeordnet ist. Hierbei wird der Umstand ausgenutzt, daß bei dem gebräuchlichen Kältemittel 134a ein direkter Zusammenhang zwischen Druck und Temperatur besteht, so daß vom gemessenen Druck auf die Temperatur geschlossen werden kann. Dieser Druckschalter bzw. Drucksensor ist üblicherweise über ein Befestigungsgewinde mit einem entsprechend ausgebildeten Anschlußstutzen an einer Klimaanlagenleitung befestigt, wobei der Anschlußstutzen ein federbelastetes Einwegeventil enthält, das in seinem Aufbau gebräuchlichen Kraftfahrzeugräderventilen sehr ähnlich ist. Der Anschlußstutzen selber wird in der Regel an einer Klimaanlagenleitung angeschweißt oder angelötet.

Unabhängig von der Art der Klimaanlagenregelung wird üblicherweise ein weiterer Stutzen zum Anschluß eines Druckschalters bzw. -sensors an der Hochdruckleitung zwischen Kompressor und Regeleinheit, sowohl bei Anlagen mit Expansionsventil als auch bei Anlagen mit Kapillarröhrchen, angebracht. Dieser Druckschalter bzw. -sensor dient im allgemeinen als Hochdrucksicherheitselement zur Abschaltung des Kompressors bei zu hohen Drücken und wird zur Steuerung eines Kühlerventilators herangezogen.

Zur Befüllung mit Kältemittel sind an den Kältemittelleitungen Service- und oder Füllstutzen angebracht. Auch diese Anschlußstutzen enthalten federbelastete Ventile. Über diese Anschlußstutzen werden mittels genormter Schnellkupplungen die Evakuierung und Erstbefüllung der Klimaanlage durchgeführt bzw. während des Kraftfahrzeuglebens Servicearbeiten erledigt. Auch diese Anschlußstutzen werden üblicherweise an die Klimaanlagenleitungen geschweißt oder gelötet.

Die übliche Füllmenge für eine Klimaanlage eines Kraftfahrzeuges liegt heute nach Vieweg bei ca. 600 bis 900g R 134a. Ein sicherer Betrieb der Klimaanlage ist gewährleistet, solange sich noch ca. 70% der ursprünglichen Füllmenge im Kältemittelkreislauf befinden. Nachteilig ist es bei heutigen Klimaanlagen, daß geringe Mengen Kältemittel durch die Schläuche und Dichtringe der Klimaanlage entweichen können. Es ist daher von Vorteil die Zahl der Dichtstellen möglichst gering zu halten.

Da jeder Anschlußstutzen eine zusätzliche Lötoperation erfordert, bedeutet eine Verringerung der Zahl Anschlußstutzen daher eine deutliche Reduzierung der Anzahl der Lötoperationen, außerdem ergibt sich ein geringfügig geringerer Materialverbrauch. Des Weiteren können so zwei Ventile entfallen.

Vor diesem Hintergrund war es die Aufgabe der vorliegenden Erfindung, eine Klimaanlage zu entwickeln, die eine verringerte Anzahl von Anschlußstutzen aufweist, um dadurch die Anzahl der Dichtstellen zu verringern, sowie gleichzeitig den Material- und Produktionsaufwand zu reduzieren.

Diese Aufgabe wird durch eine Klimaanlage für Kraftfahrzeuge mit den Merkmalen des Anspruches 1 gelöst. Weitere vorteilhafte Ausgestaltungen sind in den Unteransprüchen enthalten.

Erfindungsgemäß werden ein oder mehrere Anschlußstutzen einer Klimaanlage für Kraftfahrzeuge zur Montage von Druckschaltern oder -sensoren verwendet. Dabei kommen je nach Ausführung der Klimaanlage ein Niederdruckschalter oder -sensor und/oder ein Hochdruckschalter/-sensor zum Einsatz. Jeder Anschlußstutzen wird dabei so ausgeformt, daß nach Entfernen des Druckschalters/-sensors der Anschluß einer Schnellkupplung einer Evakuierund Befülleinheit möglich ist. Dadurch wird die heute gebräuchliche zusätzliche Anordnung von Anschlußstutzen für die Evakuierung und Befüllung der Klimaanlage überflüssig und so die Anzahl der Dichtstellen verringert. Gleichzeitig ergeben sich so Kosteneinsparungen aus dem verringerten Materialeinsatz und der weniger komplexen Produktion. Es ist allerdings eine Modifikation der zur Zeit in Großserie produzierten Druckschalter/-sensoren nötig.

In einer vorteilhaften Ausgestaltung der Erfindung enthalten der oder die oben genannten Anschlußstutzen ein Ventil. Dieses Ventil öffnet bei der Montage eines Druckschalters/-sensors bzw. durch Anschließen der Schnellkupplung einer Evakuier- und Befülleinheit und schließt automatisch bei der Demontage eines Druckschalters/-sensors bzw. bei Abnehmen der Schnellkupplung einer Evakuier- und Befülleinheit. Dies hat den Vorteil, daß bei der Montage bzw. Demontage von Druckschaltern/-sensoren und bei Anschließen oder Abnehmen von Schnellkupplungen einer Evakuier- und Befülleinheit kein Kältemittel unkontrolliert den Klimaanlagenkreislauf verlassen und in die Umwelt gelangen kann.

Eine weitere Ausgestaltung der Erfindung sieht vor, nach Entfernen eines Druckschalters/-sensors der Klimaanlage zunächst einen Adapter auf dem so frei gewordenen Anschlußstutzen der Klimaanlage zu montieren, um dann die Evakuier- und Befülleinrichtung anschließen zu können. Diese Ausgestaltung hat den Vorteil, daß die heutigen in Großserie gefertigten Druckschalter/sensoren bzw. Schnellkupplungen unverändert weiterverwendet werden können. Dadurch wird die heute gebräuchliche zusätzliche Anordnung von Anschlußstutzen für die Evakuierung und Befüllung der Klimaanlage überflüssig. In einer vorteilhaften Weiterbildung der Erfindung ist der Adapter so ausgebildet, daß das Ventil im Anschlußstutzen bei Anschluß der Evakuier- und Befüllanlage geöffnet wird. Hierdurch wird die Handhabung spürbar vereinfacht.

In einer vorteilhaften Weiterbildung der Erfindung wird in den Adapter ein Einwegeventil integriert. Bei dieser Variante wird das Einwegeventil im Anschlußstutzen beim Anbringen des Adapters geöffnet, so daß wie beim bekannten Betrieb einer Evakuier- und Befülleinrichtung, die Evakuier- und Befülleinrichtung direkt an den Klimaanlagenkreislauf angeschlossen werden kann.

In einer vorteilhaften Weiterbildung der Erfindung werden sowohl das Ventil im Anschlußstutzen als auch das Ventil im Adapter bei Anschluß der Evakuier- und Befüllanlage geöffnet. Hierdurch wird die Handhabung spürbar vereinfacht.

Eine vorteilhafte Weiterbildung der Erfindung zeichnet sich dadurch aus, daß der Adapter mindestens zwei Ventile enthält. Diese Variante bietet eine besonders hohe Sicherheit gegen Kältemittelverlust.

Bei einer vorteilhaften Ausgestaltung der Variante mit mindestens zwei Ventilen öffnet ein Ventil sobald der Adapter am Stutzen angebracht wird während ein zweites Ventil bei Anschluß des Evakuier- und Befüllgerätes geöffnet wird. Die Benutzerfreundlichkeit wird so deutlich gesteigert.

Bei einer weiteren vorteilhaften Ausgestaltung der Erfindung wird der erfindungsgemäße Adapter in eine Evakuier- und Befülleinheit integriert. Dies hat den Vorteil, daß der erfindungsgemäße Adapter sich jederzeit an der Evakuier- und Befüllanlage befindet und nicht eventuell im Werkstattbetrieb oder während der Produktion verlegt werden kann.

Bei weiteren vorteilhaften Ausgestaltungen der Erfindung weist der Adapter mindestens einen weiteren Anschluß oder Abzweig auf, der z. B. zum Anschluß eines Druckmeßgerätes geeignet ist. Durch diesen mindestens einen Abzweig lassen sich in dem Adapter mehr als nur die reine Anschlußfunktion für die Evakuier- und Befüllanlage integrieren.

Eine Weiterbildung der Erfindung sieht vor, den mindestens einen Druckschalter/-sensor so auszuformen, daß er einen Anschluß in der Art einer Schnellkupplung der Evakuier- und Befülleinrichtung aufweist. So kann die gebräuchliche Form der Füll-/ bzw. Serviceanschlußstutzen beibehalten werden, während die heute gebräuchliche zusätzliche Anordnung von Anschlußstutzen für den Druckschalter/-sensor der Klimaanlage überflüssig wird.

Die Erfindung wird anhand der in der beiliegenden Zeichnungen gezeigten Ausführungsbeispiele näher erläutert. Es zeigen
- Fig. 1: eine schematischen Skizze einer bevorzugten Ausführung eines Anschlußstutzens der erfindungsgemäßen Klimaanlage
- Fig. 2: eine Skizze des erfindungsgemäßen Adapters
- Fig. 3: eine Skizze eines erfindungsgemäßen Druckschalters/-sensors

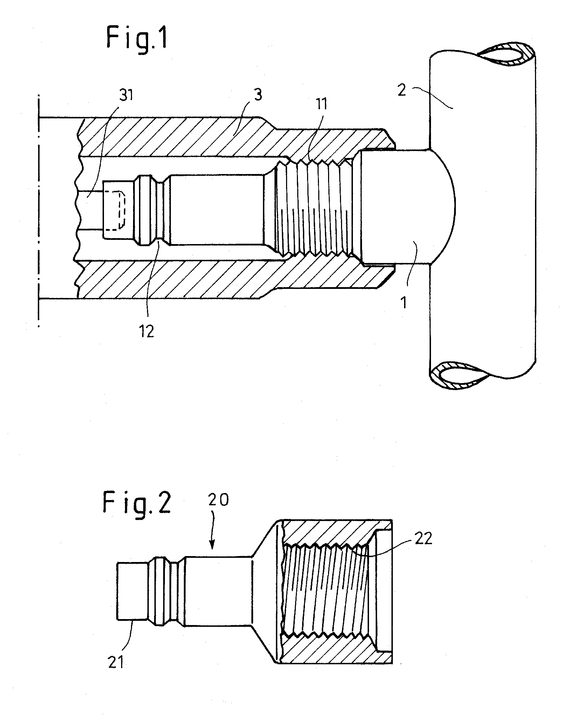

Figur 1 zeigt eine schematische Zeichnung eines Teils der erfindungsgemäßen Klimaanlage. Ein Anschlußstutzen 1 ist dabei im Bild mit einer Leitung 2 der Klimaanlage stoffschlüssig verbunden. Ein Druckschalter 3 ist über das Gewinde 11 mit dem Anschlußstutzen 1 verschraubt. Ein hervorstehendes Teil 31 des Druckschalters 3 hält dabei das Einwegeventil (hier nicht gezeigt) offen, so daß eine direkte Druckmessung des Kältemitteldruckes in der Leitung 2 der Klimaanlage möglich ist. Wird nun der Druckschalter 3 entfernt, schließt das integrierte Einwegeventil. Der der Klimaanlagenleitung 2 abgewandte Teil des Anschlußstutzens 1 ist nun frei und ermöglicht die Montage einer Schnellkupplung einer Evakuier- und Befülleinheit, wobei die Schnellkupplung in der Nut 12 einrasten kann.

In Figur 2 ist eine mögliche Ausführung des erfindungsgemäßen Adapters 20 dargestellt. Dabei ist das Ende 21 des Adapters so ausgeformt, daß es zur Montage einer Schnellkupplung einer Evakuier- und Befülleinheit geeignet ist. Das andere Ende 22 des Adapters weist hingegen ein Gewinde auf, welches dem Gewinde eines heute gebräuchlichen Druckschalters/-sensors entspricht, so daß eine Montage auf einem Anschlußstutzen einer Klimaanlage für Druckschalter/-sensoren möglich ist.

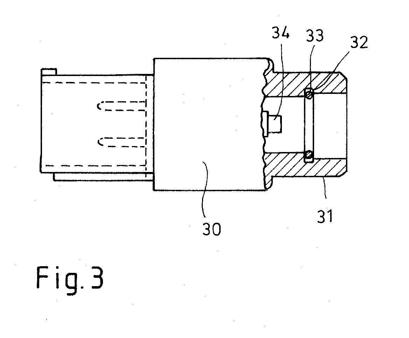

Figur 3 schließlich zeigt einen erfindungsgemäßen Druckschalter/-sensor (30). Das Ende 31 ist dabei so ausgeformt, daß es wie eine Schnellkupplung einer Evakuier- und Befülleinheit auf einen Anschlußstutzen montiert werden kann. Die Nut 32 enthält dabei einen Federring 33, der in bekannter Weise bei einer Schnellkupplung für eine Verriegelung sorgt. Der gezeigte zylindrische Absatz 34 dient bei der Montage zum Öffnen des in der Regel in einem Anschlußstutzen enthaltenen Einwegeventils.

## Patentansprüche

1. Klimaanlage für Kraftfahrzeuge mit mindestens einem Anschlußstutzen (1),
**dadurch gekennzeichnet, daß**
der mindestens eine Anschlußstutzen (1) so ausgeformt ist, daß er wahlweise sowohl für den Anschluß eines Druckschalters (3) als auch für den Anschluß einer Evakuier- und Befülleinrichtung geeignet ist.

2. Klimaanlage für Kraftfahrzeuge nach Anspruch 1,
**dadurch gekennzeichnet, daß**
der mindestens eine Anschlußstutzen (1) ein Ventil enthält.

3. Klimaanlage für Kraftfahrzeuge nach Anspruch 1 oder 2,
**dadurch gekennzeichnet, daß**
vor dem Anschluß einer Evakuier- und Befülleinrichtung ein Adapter (20) angebracht wird.

4. Klimaanlage für Kraftfahrzeuge nach Anspruch 3,
**dadurch gekennzeichnet, daß**
der Adapter (20) so ausgeformt ist, daß beim Anschließen der Evakuierund Befülleinrichtung das Ventil im Anschlußstutzen (1) geöffnet wird.

5. Klimaanlage für Kraftfahrzeuge nach Anspruch 3,
**dadurch gekennzeichnet, daß**
der Adapter (20) ein Ventil enthält.

6. Klimaanlage für Kraftfahrzeuge nach Anspruch 5,
**dadurch gekennzeichnet, daß**
der Adapter (20) so ausgeformt ist, daß beim Anschließen der Evakuierund Befülleinrichtung sowohl das Ventil im Adapter (20) als auch das Ventil im Anschlußstutzen (1) geöffnet wird.

7. Klimaanlage für Kraftfahrzeuge nach Anspruch 3,
**dadurch gekennzeichnet, daß**
der Adapter (20) mindestens zwei Ventile enthält.

8. Klimaanlage für Kraftfahrzeuge nach Anspruch 7,
**dadurch gekennzeichnet, daß**
der Adapter (20) so ausgeformt ist, daß beim Anschließen der Evakuierund Befülleinrichtung mindestens ein Ventil im Adapter (20) geöffnet wird.

9. Klimaanlage für Kraftfahrzeuge nach Anspruch 3, 4, 5, 6 oder 7
**dadurch gekennzeichnet, daß**
der Adapter (20) in der Evakuier- und Befülleinrichtung integriert ist.

10. Klimaanlage für Kraftfahrzeuge nach den Ansprüchen 3 bis 9
**dadurch gekennzeichnet, daß**
der Adapter (20) mindestens einen weiteren Anschluß oder Abzweig ausweist.

11. Klimaanlage für Kraftfahrzeuge nach Anspruch 1 oder 2,
**dadurch gekennzeichnet, daß**
der Druckschalter (3) eine Schnellkupplung enthält, die entsprechend der Schnellkupplung einer Evakuier- und Befülleinheit ausgeformt ist.
